# EUROPÄISCHE PATENTSCHRIFT

(11) **EP 1 361 797 B1**
(45) Veröffentlichungstag und Bekanntmachung des Hinweises auf die Patenterteilung: **03.05.2006**
(21) Anmeldenummer: 02708303.9
(22) Anmeldetag: 18.01.2002
(51) Int. Cl.: A23C 9/154

(54) **CREMIGES NAHRUNGSMITTEL UND VERFAHREN ZU SEINER HERSTELLUNG**
CREAMY FOODSTUFF AND METHOD FOR PRODUCTION THEREOF
ALIMENT CREMEUX ET SON PROCEDE DE PRODUCTION

(30) Priorität: 24.01.2001 EP 01101530
(43) Veröffentlichungstag der Anmeldung: 19.11.2003
(73) Patentinhaber: Société des Produits Nestlé S.A., 1800 Vevey (CH)
(72) Erfinder: GRAHAM, Judith, 81829 München (DE); HANSELMANN, William, Hershey, PA 17033 (US)
(74) Vertreter: Thomas, Alain
(86) Internationale Anmeldenummer: PCT/EP2002/000486
(87) Internationale Veröffentlichungsnummer: WO 2002/058478

(56) Entgegenhaltungen:
- EP-A- 0 930 017
- EP-A- 0 948 903
- WO-A-98/47390
- GB-A- 1 484 167
- GB-A- 2 313 286
- US-A- 4 251 560
- US-A- 4 282 262
- US-A- 4 297 379
- US-A- 4 341 808
- US-A- 5 366 742
- PATENT ABSTRACTS OF JAPAN vol. 013, no. 024 (C-561), 19. Januar 1989 (1989-01-19) & JP 63 230042 A (SAKAEYA NYUGYO KK), 26. September 1988 (1988-09-26)
- BURTON, H.: "Ultra High Temperature Processing of Milk and Milk Solids" 1988 , ELSEVIER , BARKING, GB XP002170032 Seite 39-40
- ROBINSON, R. K.: "Modern Dairy Technology, Vol. 1, Advances in Milk Processing" 1999 , ASPEN PUBLISHERS , GAITHERSBURG, MARYLAND XP002170033 Seite 95, Zeile 2-4

## Beschreibung

Die Erfindung betrifft ein Nahrungsmittel von cremiger bis pastöser Beschaffenheit, das gegebenenfalls in eine schaumige Struktur überführt werden kann, sowie ein Verfahren zu seiner Herstellung.

Sowohl im Dessertbereich wie auch auf dem Gebiet von salzigen bis würzigen Cremes und Pasten ist es häufig erwünscht, ein Produkt mit einer cremigen, vollmundigen und glatten Struktur anbieten zu können.

Damit sie eine cremige, mehr oder weniger steife Struktur aufweisen, müssen entsprechende Nahrungsmittelmassen zur Ausbildung der gewünschten Struktur bisher entweder hohe Fettanteile, beispielsweise in Form von Sahne, oder Gelbildner, insbesondere in Form von Gelatine, enthalten. Bis zu einem gewissen Grad läßt sich ein cremiges, fettartiges Mundgefühl in speziellen Rezepturen auch unter Verwendung spezieller Stärkequalitäten vortäuschen.

Nahrungsmittel mit relativ hohen Fettgehalten und/oder Gelatine, die ein Produkt tierischer Herkunft ist, sind jedoch aus diätetischen Gründen und/oder Gründen ihrer Ablehnung durch bestimmte Verbraucherkreise häufig unerwünscht, und es besteht der Wunsch nach halbflüssigen bis steifen, löffelfesten und gegebenenfalls streichfähigen oder zu Dekorationen spritzbaren Produkten, die weder Sahne noch Gelatine enthalten.

Auf dem Gebiet der als Kühlprodukte oder Regalprodukte vertriebenen Nahrungsmittel mit cremiger oder Schaumstruktur, z.B. bei schaumigen Dessertcremes und ähnlichen Produkten, sind zahlreiche Rezepturen bekannt, die zur Erzielung ihrer gewünschten Konsistenz (Rheologie) nicht unbedingt Fett enthalten müssen, sondern die als Strukturbildner Stärken und andere Polysaccharide bzw. Hydrokolloide, beispielsweise Alginate oder Pflanzengummen, oder Proteine wie Gelatine enthalten. Diese Produkte weisen bei ihrer Herstellung nach den bisher üblichen Verfahren durch einfaches gründliches Mischen und Homogenisieren ihrer Bestandteile, gegebenenfalls begleitet von einem Aufschlagen zum Luft- oder Gaseintrag, und der Ausbildung ihrer steifen Sturktur in der Endverpackung in aller Regel keine Struktur auf, die als "cremig" im üblichen Sinne bezeichnet werden kann. Je nach Rezeptur ist die Struktur eher als gelartig bis rauh zu beschreiben.

Verfahren zur Herstellung cremiger Nahrungsmittel sind beispielsweise in GB-A-2 313 286, GB-A-1 484 167, JP-A-63 230 042 und WO-A-9 847 390 beschrieben.

Es ist Aufgabe der vorliegenden Erfindung, Nahrungsmittel von cremiger bis cremig-pastöser Beschaffenheit zu schaffen, die die gewünschte Textur nicht speziellen Rezepturbestandteilen verdanken, sondern einem besonderen Herstellungsverfahren, das auf zahlreiche verschiedene Rezepturen anwendbar ist und den daraus erzeugten Nahrungsmittelprodukten eine besondere, als cremig, vollmundig und glatt beschreibbare neuartige Beschaffenheit verleiht.

Es ist ferner Aufgabe der vorliegenden Erfindung, ein Verfahren zu schaffen, das die Herstellung derartiger Nahrungsmittel ermöglicht.

Diese Aufgabe wird erfindungsgemäß durch Nahrungsmittel von cremiger bis pastöser Beschaffenheit, die Biopolymere und wäßrige Bestandteile sowie weitere übliche Bestandteile, die ausgewählt sind aus Nähr-, Geschmacks-, Aroma-, Farbstoffen, Strukturbildnern und/oder Ballaststoffen, enthalten, gelöst, die eine durch Gefriertexturieren erzeugte besondere homogene Mikrostruktur aufweisen, in der die Biopolymeren und Fette in einer mikroskopischen Feinstverteilung vorliegen. Insbesondere ist die genannte Mikrostruktur eine solche, wie sie dadurch erhältlich ist, daß man die Bestandteile des Nahrungsmittels unter Bildung einer fließfähigen Ausgangsmischung von flüssiger bis pastöser Konsistenz vermischt, die Ausgangsmischung unter andauerendem Mischen unter Erzeugung einer homogenen Mischung aller Bestandteile auf eine Produkttemperatur von weniger als 0°C, vorzugsweise weniger als -3°C und üblicherweise von etwa -5°C, abkühlt, und die erhaltene kalte homogene Mischung, gegebenenfalls nach ihrem Abfüllen in Verpackungen, warm werden läßt, so daß ihre Temperatur auf über 0°C, insbesondere über 4°C und darüber, ansteigt.

Da die im Rahmen der vorliegenden Anmeldung als Gefriertexturieren bezeichnete Strukturausbildung auf eine Umordnung von Bestandteilen, die im Rahmen dieser Anmeldung als Biopolymere bezeichnet werden, zurückgeführt werden kann, und zwar unter dem Einfluß einer zeitweisen Änderung der Verfügbarkeit des in dem Nahrungsmittel vorhandenen freien Wassers, sind die Biopolymeren sowie das in dem Nahrungsmittel vorhandene freie Wasser als die wesentlichsten funktionalen Bestandteile der Grundrezepturen der erfindungsgemäß herstellbaren Nahrungsmittel anzusehen. Da die fertigen Nahrungsmittel ferner keine niederviskosen Flüssigkeiten sein sollen, muß die Menge der Biopolymeren so hoch sein, das das fertige, homogenisierte Nahrungsmittel die gewünschte Steifigkeit entwickelt.

Als "Biopolymere" werden im Rahmen der vorliegenden Anmeldung Polymere aus den in der Natur vorkommenden genießbaren polymeren Bausteinen bezeichnet. In erster Linie umfaßt dieser Begriff alle Arten von in Lebensmitteln vorkommenden Proteinen, die insbesondere Milchproteine, jedoch gegebenenfalls auch Anteile von hydrolysierter Gelatine oder Eiprotein sind, jedoch auch Proteine pflanzlichen Ursprungs sein können. Außer Proteinen enthalten die Rezepturen der erfindungsgemäßen Nahrungsmittel in der Regel noch weitere den Biopolymeren zuzurechnende Bestandteile, und zwar insbesondere Strukturbildner in Form von Polysacchariden, zu denen auch die meisten für Nahrungsmittelzwecke geeigneten Hydrokolloide zu rechnen sind. Als Beispiele für geeignete Hydrokolloide sind Produkte wie Xanthan oder Carrageenan oder verschiedene Pflanzengummen zu nennen, während als andere Polysaccharidbestandteile insbesondere Stärken oder Cellulosen oder Cellulose-Derivate zu nennen sind, beispielsweise mikrokristalline Cellulose von Nahrungsmittelqualität. Der Proteingehalt liegt dabei in der Regel im Bereich von 0,01 - 20 Gew.-%, der Gehalt an anderen Biopolymeren in der Regel im Bereich von 0,01 - 7 Gew.-%.

Die wäßrigen Anteile werden in das Nahrungsmittel in aller Regel als Milch, insbesondere Magermilch, eingeführt, oder in Form wäßriger Lösungen der weiteren möglichen Bestandteile der Nahrungsmittelgrundzusammensetzung. Der Gehalt an Wasser, und zwar an freiem Wasser in der Ausgangsmischung, kann über einen weiten Bereich variieren und liegt in der Regel im Bereich von 50 - 95 Gew.-%, insbesondere im Bereich von 70 - 90 Gew.-%.

Neben den als "funktionale Bestandteile" bezeichenbaren Bestandteilen, d.h. den Biopolymeren und dem Wasser, enthalten die Nahrungsmittel in aller Regel noch übliche weitere Bestandteile, die die Nahrungsmittel- und/oder Genußmitteleigenschaften des Nahrungsmittels fördern. Ohne Anspruch auf Vollständigkeit gehören zu diesen Bestandteilen Nährstoffe, z.B. Fette und Zucker, Geschmacks- und Aromastoffe, beispielsweise Zucker, Zuckeraromen, Fruchtaromen, Alkohol oder Alkoholaromen, Fruchtauszüge, Salz, Gewürze und Würzpasten und ähnliche übliche Bestandteile. Außerdem können Nahrungsmittelbestandteile enthalten sein, die man je nach ihrer Funktion als Verdicker, Strukturbildner oder Ballaststoffe bezeichnen kann, und selbstverständlich können die Produkte auch natürliche, naturidentische oder künstliche Farbstoffe sowie andere Nahrungsmittelzusätze enthalten, wie sie für Nahrungsmittel des erfindungsgemäßen Typs üblich sind. Es ist ferner vorgesehen, daß den verschiedenen erfindungsgemäß herstellbaren Nahrungsmitteln auch stückige Bestandteile zugemischt werden können, beispielsweise Frucht-, Gemüse-, Fleisch- und/oder Fischstücke.

Gemäß der vorliegenden Erfindung hat es sich gezeigt, daß man auch Nahrungsmitteln, die aus bekannten Rezepturen erhalten werden und nach dem herkömmlichen Verfahren eher rauhe, stumpfe Strukturen ausbilden, eine cremige, glatte, vollmundige und glänzende Textur verleihen kann, wenn man die Rezepturbestandteile des Nahrungsmittels nicht, wie bisher üblich, nur intensiv mischt, gegebenenfalls abfüllt und es der Mischung dann gestattet, eine gewünschte mehr oder weniger steife Struktur auszubilden, sondern diese stattdessen zuerst auf übliche Weise unter Bildung einer in der Regel fließfähigen Ausgangsmischung von flüssiger bis pastöser Konsistenz vormischt und die gebildete Ausgangsmischung dann der besonderen Behandlung unterzieht, die im Rahmen dieser Anmeldung als Gefriertexturieren bezeichnet wird.

Die Strukturausbildung durch Gefriertexturieren erfolgt dadurch, daß man die bei Raumtemperatur gebildete mehr oder weniger homogene und gegebenenfalls bereits sterilisierte Ausgangsmischung unter ständigem intensivem Mischen, das durch intensives Rühren erfolgen kann, auf eine Temperatur von weniger als 0°C, insbesondere weniger als -3°C, z.B. auf -5°C oder weniger abkühlt.

Dieses Abkühlen einer Ausgangsmischung unter Rühren kann so erfolgen, wie es für die Herstellung von Speiseeis an sich bekannt ist. Speiseeisprodukte werden jedoch aufgeschlagen und tiefgefroren und in diesem Zustand in den Verkehr gebracht und im festen, gefrorenen Zustand verzehrt. Sie weisen deshalb auch andere Zusammensetzungen, insbesondere, was den Anteil an Biopolymeren betrifft, auf als erfindungsgemäße Nahrungsmittel. Läßt man übliche Speiseeisprodukte unter Erwärmung auf Temperaturen von über 0°C auftauen, werden diese in der Regel flüssig und weisen keine cremige steife Struktur auf.

Die erfindungsgemäßen Produkte läßt man nach der zur Gefriertexturierung durchgeführten Abkühlung jedoch wieder auf Temperaturen von über 0°C kommen, und zwar Kühlprodukte auf Temperaturen von etwa 4-8°C, Regalprodukte auf Raumtemperatur, und die Endprodukte sind Desserts, Speisecremes, Mousse-Produkte oder ähnliche Schäume oder Pasten, die nicht als tiefgefrorene Produkte, sondern entweder gekühlt oder auch als einfache Regalprodukte vertrieben und als Produkte von Raumtemperatur verzehrt werden.

Überraschenderweise hat es sich gezeigt, daß dann, wenn man eine entsprechende Ausgangsmischung unter ständigem intensivem Mischen unter eine bestimmte, für eine bestimmte Nahrungsmittelzusammensetzung kritische Schwellentemperatur abkühlt, eine Strukturveränderung im Sinne einer Homogenisierung der verschiedenen Nahrungsmittelbestandteile, insbesondere der Biopolymeren, eintritt, die nach dem Wiedererwärmen des Produkts zu einem Produkt mit einer für die Ausgangsrezeptur neuartigen, als cremig, vollmundig, glänzend beschreibbaren Beschaffenheit führt. Die Schwellentemperatur liegt für die Nahrungsmittel der in der vorliegenden Anmeldung angesprochenen Art in der Regel zwischen -3 und -8°C, wobei für die meisten Nahrungsmittel ein Abkühlen auf etwa -5°C geeignet ist, wobei der genaue Wert für die Schwellentemperatur jedoch rezepturabhängig ist.

Die Strukturveränderung wird, ohne daß damit eine Festlegung auf die nachfolgende Theorie erfolgt, wie folgt erklärt:

Aufgrund detaillierter begleitender Untersuchungen der verschiedenen Eigenschaftsveränderungen läßt sich annehmen, daß es beim Abkühlen unter den Gefrierpunkt bzw. unter die für die jeweilige Nahrungsmittelmischung charakteristische Schwellentemperatur dazu kommt, daß wenigstens ein Teil des freien Wassers unter Bildung von Eiskristallen gefriert und damit die Menge des verfügbaren freien Wassers in der Nahrungsmittelmischung soweit vermindert wird, daß sich die restlichen Bestandteile, das heißt insbesondere die Proteine und anderen Biopolymeren, dauerhaft anders ordnen können als bei einem einfachen Vermischen in Gegenwart der Gesamtmenge des Wassers, wobei die erzeugte Ordnung der Mikrostruktur des Produkts überraschender Weise sehr stabil ist und nicht nur nach dem Wiedererwärmen und Auftauen erhalten bleibt, sondern sogar eine Hitzesterilisierung, z.B. in Form einer üblichen Autoklavierung bei 121°C für 20 min, übersteht. Versuche, eine vergleichbare Mikrostruktur durch Feinstvermahlung/Mikronisieren bei verschiedenen Drucken zu erzeugen, zeigten außerdem, daß auf mechanischem Wege eine entsprechende Mikrostruktur nicht erzeugbar ist, sondern sich diese nur im Zuge eines physiko-chemischen Prozesses unter Bedingungen ausbildet, wie sie in der vorliegenden Anmeldung beispielhaft erläutert werden.

Nachfolgend wird die Erfindung unter Bezugnahme auf ein Beispiel und auf Figuren, die verschiedene durch das Gefriertexturieren veränderte Produkteigenschaften erläutern, noch näher beschrieben.

Es zeigen:
- Figur 1: lichtmikroskopische Aufnahmen von zwei unterschiedlich behandelten Nahrungsmittelprodukten, die aus der gleichen Ausgangsmischung hergestellt wurden, wobei das Produkt gemäß Figur 1a nach dem herkömmlichen Verfahren durch Mischen der Bestandteile erzeugt wurde, während das Produkt gemäß Figur 1b erfindungsgemäß durch Gefriertexturieren hergestellt wurde;
- Figur 2: die gleichen nach dem herkömmlichen Verfahren (Figur 2a) bzw. dem erfindungsgemäßen Verfahren (Figur 2b) hergestellten Produkte wie in Figur 1, jedoch in Form fluoreszenzmikroskopischer Photographien;
- Figur 3: ein Diagramm, das die durch das Gefriertexturieren bewirkten Änderungen des Phasenwinkels von Produkten aus der gleichen Ausgangsmischung wie in den vorausgehenden Figuren zeigt; und
- Figur 4: die Veränderungen der Produkteigenschaften durch das Gefriertexturieren nach Maßgabe der Bewertung von Produkten aus einer identischen Ausgangsmischung durch ein Panel von 10 Sensorikprüfern.

Nachfolgend wird die Erfindung anhand von Versuchsergebnissen, die auf der Basis ein und derselben Ausgangsmischung, die Magermilch, Fett, Zucker, Saccharosesirup, Magermilchpulver, Xanthan, kristalline Cellulose und L-Carrageenan umfaßte, noch näher erläutert.

### Beispiel 1

Zucker, Xanthan, 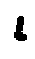 -Carrageenan, mikrokristalline Cellulose, Magermilchpulver und Vanillearoma in den nachfolgend angegebenen Mengen wurden in Magermilch gelöst bzw. dispergiert, bei 220 bar homogenisiert und anschließend bei 136°C für 30 s einer UHT-Sterilisierung unterworfen.

Die Zusammensetzung des Endprodukts war dabei wie folgt:

| | |
|---|---|
| Magermilch | 79 Gew.-% |
| Zucker | 13 Gew.-% |
| Magermilchpulver | 3,6 Gew.-% |
| Xanthan | 0,1 Gew.-% |
| 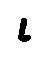 -Carrageenan | 0,3 Gew.-% |
| mikrokristalline Cellulose | 1 Gew.-% |
| Saccharosesirup | 3 Gew.-% |
| Vanillearoma | 0,04 Gew.-% |

Die wie beschrieben vorsterilisierte Ausgangsmischung wurde auf 4°C abgekühlt und in Teilmengen aufgeteilt, die auf zwei verschiedene Weisen weiter verarbeitet wurden:

Einer ersten Teilmenge erlaubte man es, direkt wie üblich unter Scherung ihre herkömmliche Produktstruktur auszubilden.

Eine zweite Teilmenge wurde zusätzlich einer erfindungsgemäßen Gefriertexturierung unterzogen, indem die Ausgangsmischung mit einer Ausgangstemperatur von 4°C einem kühlbaren Rührgefäss zugegeben wurde, in dem die Ausgangsmischung unter Rühren bis auf eine Produkt-Endtemperatur von -5°C abgekühlt wurde. Das erhaltene fließfähige Produkt wurde aseptisch in Becher abgefüllt, die verschlossen und bei +4°C gelagert wurden, wobei die gefrorenen Anteile an freiem Wasser auftauten und das Produkt in seiner Endstruktur erhalten wurde.

Die Eigenschaften des durch Kühlen und Wiedererwärmen gefriertexturierten Produktes wurden mit denen des auf herkömmliche Weise hergestellten Produkts aus der ersten Teilmenge der Ausgangsmischung verglichen.

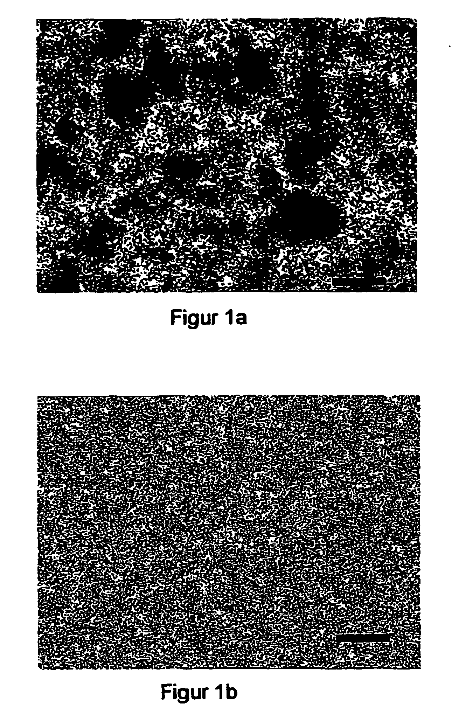

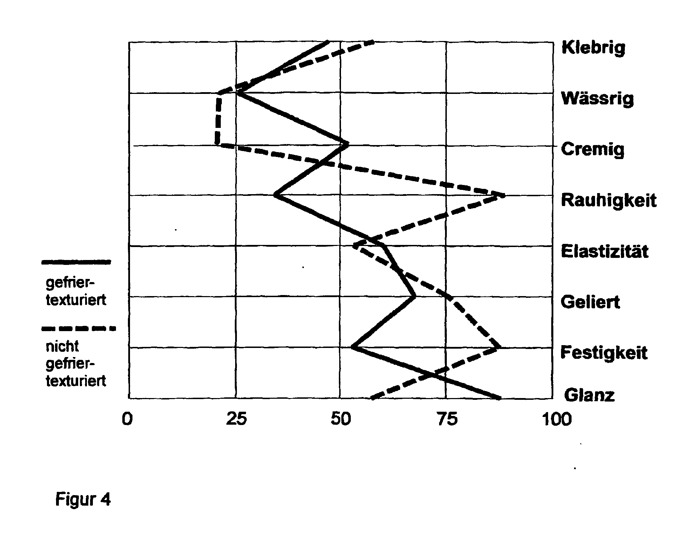

Die unterschiedlichen Produkteigenschaften sind in den Figuren 1 bis 4 bildlich und in Diagrammform einander gegenüber gestellt.

Die angewandten Untersuchungsverfahren waren dabei wie folgt:
a) Mikroskopische Untersuchung mit Durchlicht: Dazu wurden ca. 5-10 mg Produkt mit einem Teelöffel auf einen Objektträger mit Abmessungen von 76x26x1 mm (vertrieben von der Fa. Marienfeld; Artikel No. 10 000 000) aufgetragen und mit einem Deckglas 24x50 mm (vertrieben von der Fa. Marienfeld; Artikel No. 1) flachgedückt. Die so präparierte Probe wurde dann mit einer geeigneten Durchlichtstärke analysiert.
b) Fluoreszenzmikroskopische Untersuchung nach Anfärbung mit Nile Red und ANS, photographiert mit Licht der zum verwendeten Farbstoff gehörenden Wellenlängen;
c) Messung des Phasenwinkels: Vane Geometrie (Durchmesser 18 mm, Länge 50 mm, Strain 0,8 Pa), gemessen mit einem Haake RS 150; der Phasenwinkel ergibt sich als arctan G"/G' .

Wie den beiden Figuren 1a (herkömmlich durch Mischen strukturiertes Produkt) und Figur 1b (erfindungsgemäß gefriertexturiertes Produkt), die lichtmikroskopische Aufnahmen unter Durchlicht mit einem Olympus BH-2-Mikroskop zeigen, klar zu entnehmen ist, zeigt das nach dem herkömmlichen Verfahren strukturierte Produkt gemäß Figur 1a die typische Phasentrennung der verschiedenen Mischungsbestandteile wie Proteine und andere Biopolymere, erkennbar als relativ grobe Cluster von unterschiedlicher Farbe. Dagegen zeigt das gefriertexturierte Produkt gemäß Figur 1b eine sehr viel feinere und homogenere Struktur ohne erkennbare grobe Cluster, die in der lichtmikroskopischen Darstellung eher wie die Struktur eines strukturierten Pergamentpapiers oder eines Eisbelags auf einer Fensterscheibe wirkt. Die optisch erkennbaren Unterschiede sind so eindeutig, daß davon auszugehen ist, daß ein nach dem erfindungsgemäßen Verfahren gefriertexturiertes Produkt stets ohne weiteres von einem Produkt, das durch herkömmliches Mischen und gegebenenfalls Hochdruckhomogenisieren aus der gleichen Ausgangsmischung hergestellt wurde, unterschieden werden kann.

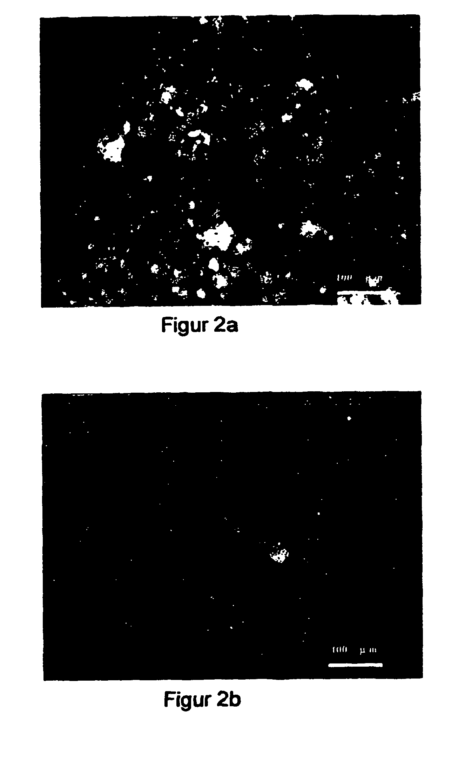

Ähnliche Unterschiede sind auch in den fluoreszenzmikroskopischen Aufnahmen gemäß Figur 2 zu erkennen. Für die fluoreszenzmikroskopischen Aufnahmen wurden die Proteine und Fette der Ausgangsmischung angefärbt (Nile Red und ANS), und die Produktprobe wurde unter Licht einer zu den jeweiligen Farbstoffen passenden Wellenlänge optisch ausgewertet. Wiederum sind bei dem herkömmlichen Produkt (Figur 2a) grobkörnige, clusterartige Strukturen zu erkennen, während bei dem erfindungsgemäß gefriertexturierten Produkt keine klaren Strukturen erkennbar sind, sondern eine viel homogenere Verteilung der einzelnen Bestandteile in feiner Form, erkennbar an unterschiedlichen Helligkeitsschattierungen (eigentlich Farbschattierungen).

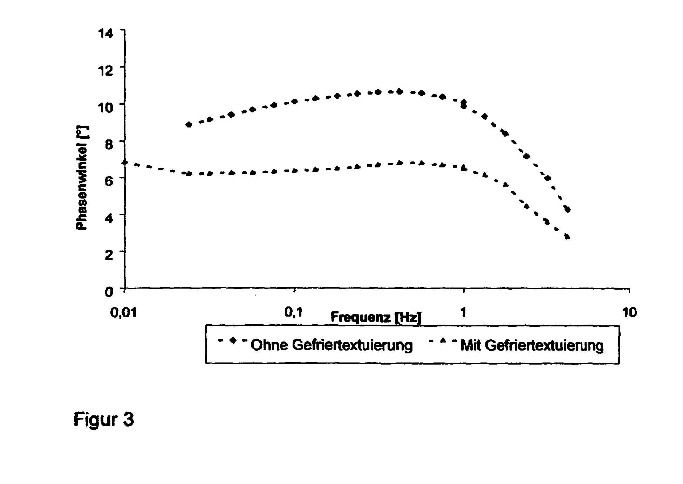

Auch eine Messung des Phasenwinkels gemäß Figur 3 zeigt deutliche Unterschiede zwischen einem gefriertexturierten Produkt und einem herkömmlich durch Mischen erzeugten Produkt. Für das gefriertexturierte Produkt (untere Kurve) wird ein deutlich niedrigerer Phasenwinkel gemessen, was bedeutet, daß ein erfindungsgemäß gefriertexturiertes Produkt elastischer ist und sich eine höhere strukturelle Ordnung ausgebildet hat. Für den Fachmann deuten die Unterschiede des Phasenwinkels auf völlig unterschiedliche Strukturen hin.

Die unterschiedlichen Produkte wurden ferner einer sensorischen Bewertung durch ein Panel von 10 trainierten Sensorikprüfern für Desserts unterzogen, wobei die gleichen Proben bewertet wurden, von denen die unterschiedlichen Aufnahmen der Figuren 1 und 2 hergestellt worden waren. Wie zu erkennen ist, unterscheidet sich das erfindungsgemäß gefriertexturierte Produkt insbesondere bei den Produkteigenschaften cremige Struktur, Rauhigkeit, Festigkeit und Glanz statistisch signifikant von einem herkömmlich durch Mischen hergestellten Produkt, das weniger cremig, dafür deutlich rauher und fester war und einen niedrigeren Glanz aufwies.

Es wurde ferner in Reihenversuchen mit der obigen Rezeptur festgestellt, daß der Effekt der Gefriertexturierung erst jenseits einer ausgeprägten Schwellentemperatur erhalten wurde, die bei -3,5°C lag. Diese Temperatur entspricht einer Menge von 50 % Eiskristallen im in der Mischung vorhandenen freien Wasser (das 80 % der Gesamtmenge an nachweisbarem Wasser ausmacht).

Deutliche Unterschiede zwischen den Produkten zeigten sich auch bei weiteren Untersuchungen mittels DSC (differential scanning calorimetry), und zwar speziell bei den Kristallisationstemperaturen. Die Kristallisationstemperatur des nicht-gefriertexturierten Produkts lag bei -16,1°C, während sie für das gefriertexturierte Produkt mit -21,4°C erheblich niedriger lag. Der Unterschied dieser Werte zeigt, daß bei beiden Produkten das vorhandene freie Wasser auf unterschiedliche Weise in der Nahrungsmittelmatrix verteilt ist. Offensichtlich ist ein Teil des freien Wassers im gefriertexturierten Produkt sehr viel inniger an die Bestandteile des Nahrungsmittels gebunden als bei dem herkömmlichen Produkt.

Das gefriertexturierte Produkt der vorliegenden Erfindung soll beim Rühren unter Scherbedingungen nicht nenneswert belüftet werden. Das Gefrieren unter Rühren und das Auftauen dienen ausschließlich der Ausbildung der gewünschten Produktstruktur. Es liegt jedoch im Bereich der Erfindung, ein auf diese Weise hergestelltes Produkt nachträglich durch Gaseintrag zu schäumen oder durch Vermischen mit einem Schaum in eine aufgelockerte Speise zu überführen.

## Patentansprüche

1. Nahrungsmittel von cremiger bis pastöser Beschaffenheit, das Biopolymere und Wasser sowie gegebenenfalls weitere Bestandteile, die aus einer Nähr-, Geschmacks-, Aroma-, Farb-, Strukturierungs- und/oder Ballaststoffe und deren Kombinationen umfassenden Gruppe ausgewählt sind, enthält, **dadurch gekennzeichnet, daß** es eine durch Gefriertexturieren erzeugte homogene Mikrostruktur aufweist, in der die Biopolymeren und Fette in einer mikroskopischen Feinstverteilung vorliegen und das **dadurch** erhalten wird, dass man
- die Bestandteile des Nahrungsmittels unter Bildung einer fließfähigen Ausgangsmischung von flüssiger bis pastöser Konsistenz vermischt,
- die Ausgangsmischung unter gleichzeitigem andauerndem Mischen unter Erzeugung einer homogenen Mischung aller Bestandteile ohne Belüftung auf eine Produkttemperatur von weniger als 0°C abkühlt, und
- die Temperatur der erhaltenen homogenen Mischung anschließend auf eine Temperatur von 4°C und darüber ansteigen läßt.

2. Nahrungsmittel nach Anspruch 1, **dadurch gekennzeichnet, daß** es eine cremige Masse ist.

3. Nahrungsmittel nach Anspruch 1 oder 2, **dadurch gekennzeichnet, daß** die Biopolymeren Proteine oder Polysaccharide sind und die wäßrigen Bestandteile in Form von Milch und/oder wäßrigen Lösungen der Biopolymeren und/oder der weiteren Bestandteile der Rezeptur in die Ausgangsmischung eingebracht wurden.

4. Nahrungsmittel nach einem der Ansprüche 1 bis 3, **dadurch gekennzeichnet, daß** es ein süßes Cremedessert oder ein Cremeprodukt der salzigen und/oder würzigen Geschmacksrichtung ist.

5. Nahrungsmittel nach einem der Ansprüche 1 bis 4, **dadurch gekennzeichnet, daß** es als Proteine Milchproteine und als Polysaccharide Biopolymere vom Hydrokolloidtyp, insbesondere Xanthan und/oder Carrageenan, und/oder mikrohristalline Cellulose enthält und die Menge der Biopolymeren im Bereich von 0,01 bis 30 Gew.-% liegt, und daß die Menge an Fetten im Produkt im Bereich von 0 bis 30 Gew.-% liegt.

6. Nahrungsmittel nach einem der Ansprüche 1 bis 5, **dadurch gekennzeichnet, daß** es ein aseptisch abgefülltes Nahrungsmittel ist, das durch Sterilisierung der Ausgangsmischung und/oder durch Sterilisierung des gefriertexturierten fertigen Nahrungsmittels, insbesondere durch In-Pack-Sterilisation oder Pasteurisation in einem Autoklaven, haltbar gemacht wurde.

7. Verfahren zur Herstellung eines cremigen bis pastösen Nahrungsmittels, das (i) Biopolymere und (ii) Wasser sowie gegebenenfalls (iii) weitere Bestandteile, die aus einer Nähr-, Geschmacks-, Aroma-, Farb-, Strukturierungs- und/oder Ballaststoffe und deren Kombinationen umfassenden Gruppe ausgewählt sind, enthält, und eine durch Gefriertexturieren erzeugte homogene Mikrostruktur aufweist, bei dem man
- die Bestandteile des Nahrungsmittels unter Bildung einer Ausgangsmischung von flüssiger bis pastöser Konsistenz vermischt,
- die Ausgangsmischung unter gleichzeitigem andauerndem Mischen ohne Belüftung auf eine Produkttemperatur von weniger als 0°C abkühlt und dabei eine homogene Mischung aller Bestandteile des Nahrungsmittels erzeugt, und
- die Temperatur der erhaltenen homogenen Mischung, gegebenenfalls nach deren Abfüllen in eine Verpackung für cremige bis pastöse Nahrungsmittelprodukte, auf eine Vertriebs- und Verzehrtemperatur von 4°C und darüber ansteigen läßt.

8. Verfahren nach Anspruch 7, bei dem man das Mischen als Rühren, insbesondere unter scherenden Bedingungen, durchfuhrt und man beim Kühlung auf eine Produkttemperatur von -3 °C und darunter, insbesondere auf -4 °C und darunter, abkühlt.

9. Verfahren nach einem der Ansprüche 7 oder 8, **dadurch gekennzeichnet, daß** man die Ausgangsmischung vor dem Schritt des Mischens und Abkühlens homogenisiert und pasteurisiert und/oder durch eine UHT-Behandlung sterilisiert.

10. Verfahren nach einem der Ansprüche 7 bis 9, **dadurch gekennzeichnet, daß** man das gefriertexturierte Nahrungsmittel nach dem Abfüllen in die Verpackung in der offenen oder verschlossenen Verpackung durch Erhitzen sterilisiert oder pasteurisiert.

## Claims

1. Foodstuff having a creamy to pasty consistency, containing biopolymers and water and optionally other constituents, which are selected from a group comprising nutrients, flavourings, aroma substances, colourings, texturing substances and/or bulking agents and combinations thereof, **characterised in that** it displays a homogeneous microstructure produced by freeze texturing, in which the biopolymers and fats are present in a very fine microscopic dispersion, and which is obtained by
- mixing the constituents of the foodstuff to form a flowable starting mixture having a liquid to pasty consistency,
- cooling the starting mixture to a product temperature of less than 0°C with simultaneous continuous mixing without aeration to obtain a homogeneous mixture of all constituents, and
- then allowing the temperature of the homogeneous mixture obtained to rise to a temperature of 4°C and above.

2. Foodstuff according to claim 1, **characterised in that** it is a creamy mass.

3. Foodstuff according to claim 1 or 2, **characterised in that** the biopolymers are proteins or polysaccharides and the aqueous constituents in the form of milk and/or aqueous solutions of the biopolymers and/or the other constituents of the recipe were incorporated into the starting mixture.

4. Foodstuff according to one of claims 1 to 3, **characterised in that** it is a sweet cream dessert or a cream product having a salty and/or spicy flavour.

5. Foodstuff according to one of claims 1 to 4, **characterised in that** it contains as proteins milk proteins and as polysaccharides biopolymers of the hydrocolloid type, in particular xanthan and/or carrageenan, and/or microcrystalline cellulose and the amount of biopolymers is in the range from 0.01 to 30 wt.%, and that the amount of fats in the product is in the range from 0 to 30 wt.%.

6. Foodstuff according to one of claims 1 to 5, **characterised in that** it is a foodstuff which is filled aseptically and which has been preserved by sterilising the starting mixture and/or by sterilising the freeze-textured finished foodstuff, in particular by in-pack sterilisation or pasteurisation in an autoclave.

7. Process for producing a creamy to pasty foodstuff which contains (i) biopolymers and (ii) water and optionally (iii) other constituents, which are selected from a group comprising nutrients, flavourings, aroma substances, colourings, texturing substances and/or bulking agents and combinations thereof, and which displays a homogeneous microstructure obtained by freeze texturing, wherein
- the constituents of the foodstuff are mixed to form a flowable starting mixture having a liquid to pasty consistency,
- the starting mixture is cooled to a product temperature of less than 0°C with simultaneous continuous mixing without aeration to obtain a homogeneous mixture of all constituents of the foodstuff, and
- the temperature of the homogeneous mixture obtained, optionally after introduction into a packaging for creamy to pasty food products, is allowed to rise to a distribution and consumption temperature of 4°C and above.

8. Process according to claim 7, wherein mixing is performed by stirring, in particular under shear conditions, and cooling is carried out by cooling to a product temperature of -3°C and below, in particular to -4°C and below.

9. Process according to one of claims 7 or 8, **characterised in that** the starting mixture is homogenised and pasteurised and/or sterilised by a UHT treatment before the mixing and cooling step.

10. Process according to one of claims 7 to 9, **characterised in that** after being introduced into the packaging the freeze-textured foodstuff is sterilised or pasteurised in the open or closed packaging by heating.

## Revendications

1. Aliment de nature crémeuse à pâteuse, qui contient des biopolymères et de l'eau ainsi que, le cas échéant, d'autres constituants, qui son choisis dans un groupe comprenant des substances nutritives, des substances modifiant le goût, des aromatisants, des colorants, des agents stucturants et/ou des charges et des combinaisons de ces constituants, **caractérisé en ce qu'**il possède une microstructure homogène, produite par texturation par congélation, dans laquelle les biopolymères et les graisses se présentent avec une très fine répartition microscopique, et que l'on obtient
- en mélangeant les constituants de l'aliment pour former un mélange initial fluide de consistance liquide à pâteuse,
- en refroidissant le mélange initial sans aération tout en l'agitant continuellement, pour produire un mélange homogène de tous les constituants, à une température du produit inférieure à 0°C, et
- en laissant ensuite monter à une valeur de 4°C et plus la température du mélange homogène obtenu.

2. Aliment suivant la revendication 1, **caractérisé en ce qu'**il est une masse crémeuse.

3. Aliment suivant la revendication 1 ou 2, **caractérisé en ce que** les biopolymères sont des protéines ou des polysaccharides et les constituants aqueux ont été introduits dans le mélange initial sous forme de lait et/ou de solutions aqueuses des biopolymères et/ou des autres constituants de la formulation.

4. Aliment suivant l'une des revendications 1 à 3, **caractérisé en ce qu'**il est une crème de dessert sucrée ou un produit crémeux d'arôme salé et/ou épicé.

5. Aliment suivant l'une des revendications 1 à 4, **caractérisé en ce qu'**il contient comme protéines des protéines du lait et, comme polysaccharides, des biopolymères du type d'un hydrocolloide, en particulier du xanthane ou un carraghénane, et/ou de la cellulose microcristalline et la quantité de biopolymères se situe dans la plage de 0,01 à 30 % en poids, et **en ce que** la quantité de graisses dans le produit se situe dans la plage de 0 à 30 % en poids.

6. Aliment suivant l'une des revendications 1 à 5, **caractérisé en ce qu'**il est un aliment conditionné selon des mesures aseptiques, qui a été rendu apte à la conservation par stérilisation du mélange initial et/ou par stérilisation de l'aliment fini texturé par congélation, notamment par stérilisation ou pasteurisation en emballage dans un autoclave.

7. Procédé de production d'un aliment crémeux à pâteux, qui contient (i) des biopolymères et (ii) de l'eau ainsi que, le cas échéant, (iii) d'autres constituants qui sont choisis dans un groupe comprenant des substances nutritives, des substances modifiant le goût, des aromes, des colorants, des agents de texturation et/ou des charges et des combinaisons de ces constituants, et présente une microstructure homogène produite par texturation par congélation, procédé dans lequel
- on mélange les constituants de l'aliment rassemblés pour former un mélange initial de consistance liquide ou pâteuse,
- on refroidit le mélange initial, tout en l'agitant continuellement sans aération, à une température du produit inférieure à 0°C, ce qui donne un mélange homogène de tous les constituants de l'aliment, et
- on laisse remonter la température du mélange homogène obtenu, éventuellement après son conditionnement dans un emballage pour produits alimentaires crémeux à pâteux, à une température de distribution et de consommation de 4°C et plus.

8. Procédé suivant la revendication 7, dans lequel on conduit l'opération de mélange par agitation, en particulier dans des conditions de cisaillement, et on procède au refroidissement à une température du produit de -3°C et au-dessous, notamment à -4°C et au-dessous.

9. Procédé suivant l'une des revendications 7 ou 8, **caractérisé en ce qu'**avant l'étape de mélange et de refroidissement, on homogénéise et pasteurise le mélange initial et/ou on le stérilise par un traitement UHT.

10. Procédé suivant l'une des revendications 7 à 9, **caractérisé en ce qu'**après avoir chargé dans l'emballage l'aliment texturé par congélation, on le stérilise ou le pasteurise dans l'emballage ouvert ou fermé.
